# EUROPEAN PATENT APPLICATION

(11) **EP 2 980 925 A1**
(43) Date of publication of application: **03.02.2016**
(21) Application number: 14776271.0
(22) Date of filing: 25.03.2014
(51) Int. Cl.: H01R 13/629, B60L 11/18, H01M 10/46

(54) **CONNECTOR FOR ELECTRICAL CONNECTION**

(30) Priority: 29.03.2013 JP 2013074526
(71) Applicant: Panasonic Intellectual Property Management Co., Ltd., Osaka-shi, Osaka 540-6207 (JP)
(72) Inventor: LEE, Haeree, Osaka-shi, Osaka 540-6207 (JP); GODA, Jun, Osaka-shi, Osaka 540-6207 (JP); SHIBATA, Tetsuji, Osaka-shi, Osaka 540-6207 (JP); KAGAWA, Takuya, Osaka-shi, Osaka 540-6207 (JP); SHIBATA, Kiwamu, Osaka-shi, Osaka 540-6207 (JP)
(74) Representative: Müller-Boré & Partner Patentanwälte PartG mbB
(86) International application number: PCT/JP2014/001718
(87) International publication number: WO 2014/156132

(57) **Abstract**

The connector for electrical connection (1) according to the present invention includes a contact (13) and a case (10), and is electrically connected to an inlet (4) by insertion of the contact (13) into a recess (411) formed in the inlet (4). The case (10) is movable toward the inlet (4) with respect to the contact (13) in a state where the contact (13) is being inserted to a predetermined position in the recess (411).

## Description

### TECHNICAL FIELD

The present invention generally relates to connectors for electrical connection, and particularly, a connector for electrical connection which is to be electrically connected to an inlet.

### BACKGROUND ART

For example, Document 1 (JP 2012-174643 A) discloses a power feeding connector for charging a battery installed in an electric motor vehicle such as an electric vehicle (EV) or a plug-in hybrid electric vehicle (PHEV). The power feeding connector disclosed in Document 1 includes a connector main body having multiple terminals, a case to accommodate the connector main body, and a grip member attached to the case.

The case is formed into a tubular shape having both opening ends in a front and back direction, and the connector main body is accommodated in a front end part of the case so as to be slidable in the front and back direction with respect to the case. The grip member is formed into a tubular shape having an opening front end, and accommodates a rear end part of the case inside so as to be slidable in the front and back direction with respect to the case.

The case is provided in an inside thereof with an arm of which one end is rotatably supported by the case via a first pin, and the other end of the arm is connected to part of the grip member via a second pin. The arm has a middle portion connected to the connector main body via a third pin, and is configured to rotate about the first pin along with movement of the grip member such that the connector main body moves in the same direction as a direction in which the grip member moves.

When the power feeding connector is connected to a power receiving connector, the case is positioned with respect to the power receiving connector by inserting an end of the case into a recess formed in the power receiving connector, and pushing the grip member toward the power receiving connector such that the case comes into contact with the power receiving connector. By further pushing the grip member toward the power receiving connector, the connector main body moves toward the power receiving connector with respect to the case positioned in the power receiving connector to be connected with a connector main body formed in the power receiving connector.

The power feeding connector disclosed in the above-mentioned Document 1 has such a structure that the connector main body and the grip member each slide with respect to the case, and therefore, for example, when the case is distorted, it is likely to cause operation failure.

### SUMMARY OF INVENTION

In view of the above insufficiency, the present invention has aimed to propose a connector for electrical connection, which can reduce possibility of operation failure in a case where a case is distorted.

A connector for electrical connection of a first aspect in accordance with the present invention includes a contact and a case, and is electrically connected to an inlet by insertion of the contact into a recess formed in the inlet. The case is movable toward the inlet with respect to the contact in a state where the contact is being inserted to a predetermined position in the recess.

A connector for electrical connection of a second aspect in accordance with the present invention, realized in combination with the first aspect, further includes a stopper. The stopper is configured to, when the contact does not reach the predetermined position, suppress the contact from moving toward the case. The stopper is configured to, when the contact reaches the predetermined position, cancel the suppression of movement of the contact by coming into contact with the inlet.

A connector for electrical connection of a third aspect in accordance with the present invention, realized in combination with the first or second aspect, further includes a link and a locking lever. The link has a middle portion connected to the contact via a first shaft and one end attached to the case via a second shaft, and is configured to rotate about the second shaft with respect to the case. The locking lever is configured to rotate between a fixing position where the case is fixed to the inlet and a release position where the case is detached from the inlet. The locking lever is connected to the other end of the link via a third shaft. The case has a guide along which the third shaft moves together with movement of the contact.

A connector for electrical connection of a fourth aspect in accordance with the present invention, realized in combination with any one of the first to third aspects, further includes a contact part, a handle, a rack and a pinion. The contact part is configured to open or close a power feeding path to the inlet. The handle is configured to move between a first position where the contact part is opened and a second position where the contact part is closed. The rack and the pinion are configured to move the handle. The rack is configured to move away from the inlet by a force applied by the inlet at a time of connection to the inlet. The pinion to mesh with the rack is configured to move the handle from the first position to the second position.

A connector for electrical connection of a fifth aspect in accordance with the present invention, realized in combination with any one of the first to third aspects,
further includes a contact part, a handle, a rack and a pinion. The contact part is configured to open or close a power feeding path to the inlet. The handle is configured to move between a first position where the contact part is opened and a second position where the contact part is closed. The rack and the pinion are configured to move the handle. The rack is configured to move away from the contact by a force applied by the contact at a time of connection to the inlet. The pinion to mesh with the rack is configured to move the handle from the first position to the second position.

A connector for electrical connection of a sixth aspect in accordance with the present invention, realized in combination with any one of the first to fifth aspects, further includes a locking lever, an operation part, a release part, a suppression part, and a forced release part. The locking lever is configured to rotate between a fixing position where the case is fixed to the inlet and a release position where the case is detached from the inlet. The operation part is operated to release a fixed state made by the locking lever. The release part is configured to move in a direction of releasing the fixed state made by the locking lever in accordance with operation for the operation part. The suppression part is configured to suppress operation for the operation part in a state where electric power is supplied to the contact, and allow operation for the operation part when power supply to the contact is stopped. The forced release part is configured to move the release part in the direction of releasing the fixed state made by the locking lever in a state where the suppression part suppresses operation for the operation part.

A connector for electrical connection of a seventh aspect in accordance with the present invention, realized in combination with any one of the first to sixth aspects, is configured to electrically connect: an apparatus having an electric storage part; and an electric power unit configured to control at least one of electric charging to the apparatus and electric discharging from the apparatus.

In a connector for electrical connection of an eighth aspect in accordance with the present invention, realized in combination with the seventh aspect, the apparatus is an electric motor vehicle.

### BRIEF DESCRIPTION OF THE DRAWINGS

FIG. 1A is an operation explanatory view of a connector for electrical connection of an embodiment.
FIG. 1B is an operation explanatory view of the connector for electrical connection of the embodiment.
FIG. 1C is an operation explanatory view of the connector for electrical connection of the embodiment.
FIG. 1D is an operation explanatory view of the connector for electrical connection of the embodiment.
FIG. 2 is an external view illustrating the connector for electrical connection of the embodiment viewed from a side thereof.
FIG. 3 is a side view of the connector for electrical connection of the embodiment from which one case piece is detached.
FIG. 4 is another side view of the connector for electrical connection of the embodiment from which one case piece is detached.
FIG. 5 is a schematic block diagram illustrating a connection state of the connector for electrical connection of the embodiment.
FIG. 6A is an operation explanatory view of another connector for electrical connection of the embodiment.
FIG. 6B is an operation explanatory view of another connector for electrical connection of the embodiment.
FIG. 6C is an operation explanatory view of another connector for electrical connection of the embodiment.
FIG. 6D is an operation explanatory view of another connector for electrical connection of the embodiment.
FIG. 7 is a perspective view of yet another connector for electrical connection of the embodiment from which one case piece is detached.
FIG. 8A is an operation explanatory view of yet another connector for electrical connection of the embodiment.
FIG. 8B is an operation explanatory view of yet another connector for electrical connection of the embodiment.
FIG. 8C is an operation explanatory view of yet another connector for electrical connection of the embodiment.
FIG. 8D is an operation explanatory view of yet another connector for electrical connection of the embodiment.
FIGS. 9A to 9D are enlarged views each illustrating a primary part of yet another connector for electrical connection of the embodiment.
FIGS. 10A and 10B are another enlarged views each illustrating a primary part of yet another connector for electrical connection of the embodiment.
FIGS. 11A to 11C are yet another enlarged views each illustrating a primary part of yet another connector for electrical connection of the embodiment.

### DESCRIPTION OF EMBODIMENTS

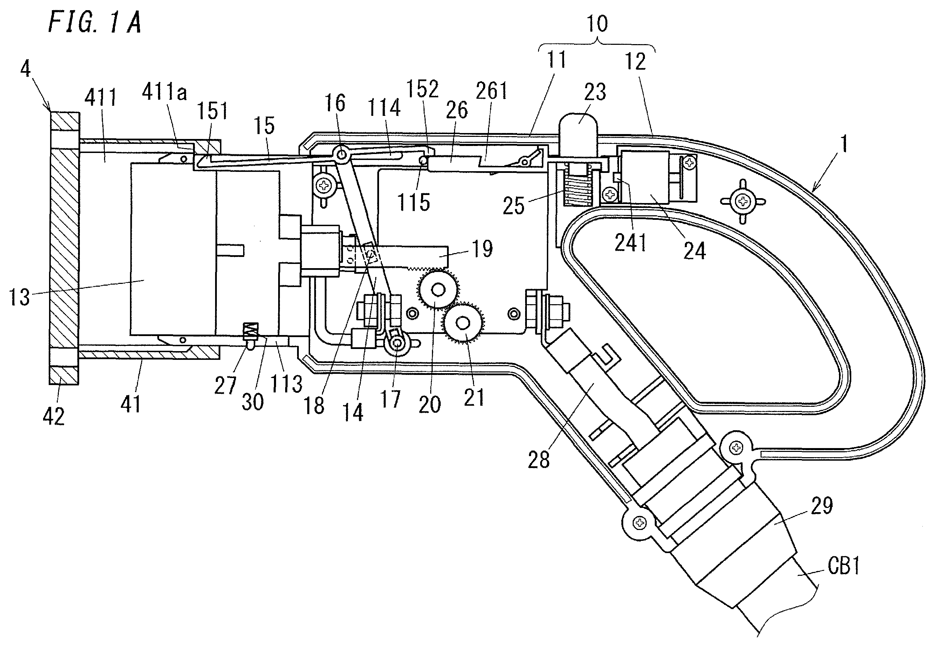

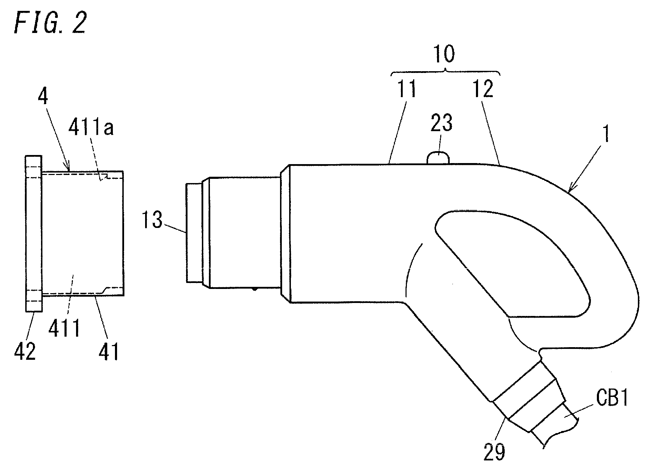

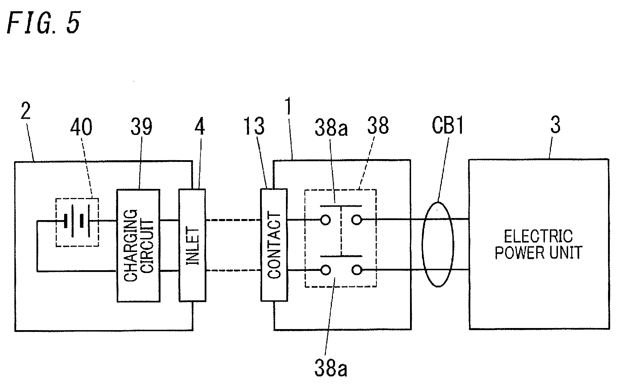

The following explanations referring to FIGS. 1A to 11C are made to a connector for electrical connection of an embodiment. A connector for electrical connection 1 of the present embodiment is, for example, as shown in FIG. 5, used for electrically connecting an electric motor vehicle 2 (apparatus) and an electric power unit 3 and supplying electric power from the electric power unit 3 to the electric motor vehicle 2. Note that, unless otherwise noted, in the following explanations, the left and right direction in FIG. 2 is defined as a front and back direction of the connector for electrical connection 1 (the left side is defined as a front side), and the upward and downward direction in FIG. 2 is defined as an upward and downward direction of the connector for electrical connection 1.

FIG. 5 is a schematic block diagram illustrating a connection state of the connector for electrical connection 1. The connector for electrical connection 1 includes a contact part 38 and a contact 13. The contact part 38 is configured to open or close a power feeding path extending from the electric motor vehicle 2 to the electric power unit 3. The contact 13 is insertably/extractably connected to an inlet 4 of the electric motor vehicle 2. The contact part 38 includes two contact points 38a and 38a configured to be opened or closed in conjunction with each other. Each contact point 38a has one end connected to the contact 13 and the other end connected to the electric power unit 3 via an electric cable CB1. The contact 13 is described later.

The electric power unit 3 is, for example, a DC/AC power converter, and configured to convert AC power supplied from a commercial power source into predetermined DC power, and supply the converted DC power to the electric motor vehicle 2 via the connector for electrical connection 1.

The electric motor vehicle 2 includes the inlet 4, a charging circuit 39 and a storage battery 40 (electric storage part). The contact 13 is insertably/extractably connected to the inlet 4. The charging circuit 39 generates DC power having a desired voltage value from the above-mentioned DC power supplied via the inlet 4. The storage battery 40 stores the DC power generated by the charging circuit 39. The electric motor vehicle 2 may be an electric vehicle (EV) having only an electric motor as a power source, or a plug-in hybrid electric vehicle (PHEV) where both an engine and an electric motor are used as a power source.

As shown in FIGS. 1A to 4, the inlet 4 includes a main body 41 and an attachment part 42. The main body 41 is formed into a tubular shape, and has, in an internal space thereof, a recess 411. The attachment part 42 has a disk shape and is integrally formed at a front end of the main body 41. Further, the main body 41 is provided at an upper edge in an opening thereof with a stepped part 411a to catch a hook part 151 of a locking lever 15 (see FIG. 1A).

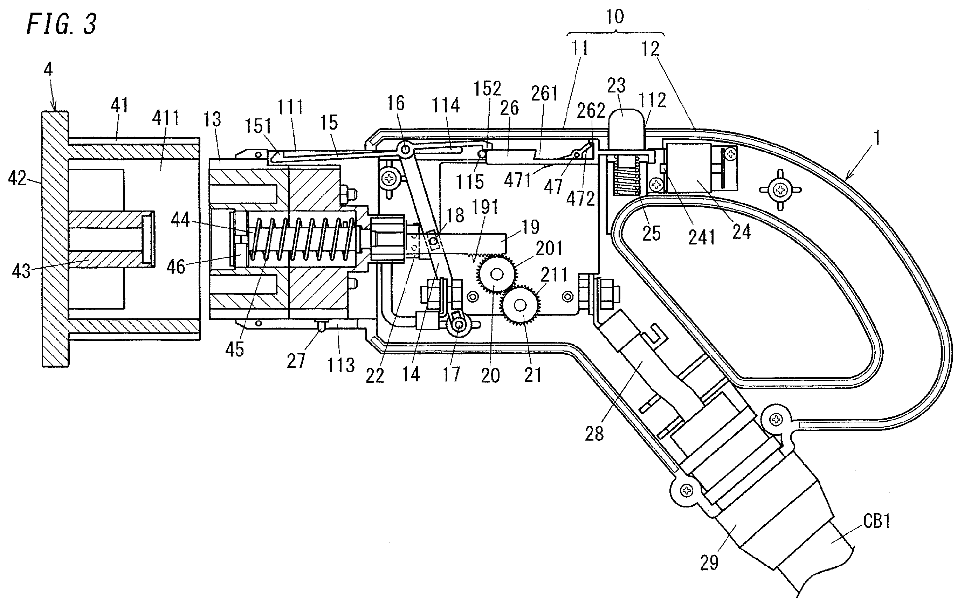

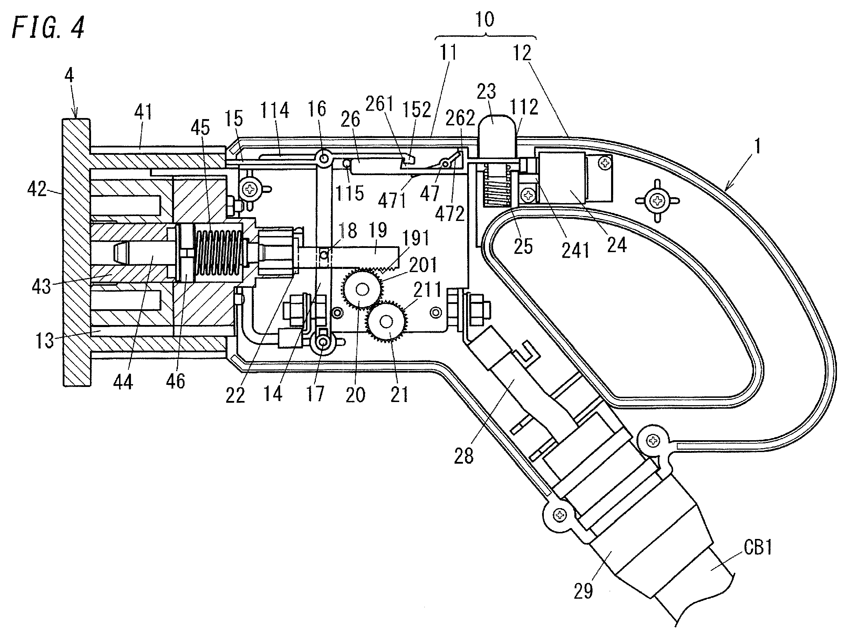

In addition, the main body 41 is provided inside the recess 411 thereof with a power feeding socket 43 having a tubular shape. When a contact pin 44 described later comes into contact with an inner surface of the power feeding socket 43, the connector for electrical connection 1 and the inlet 4 are electrically connected to each other. FIGS. 3 and 4 each illustrate not a cutting plane of the inlet 4 taken along a plane including a central axis of the main body 41, but a cutting plane of the inlet 4 taken along a plane positioned in front of the central axis. FIGS. 3 and 4 illustrate a case 10 from which a closer case piece is detached.

FIGS. 3 and 4 are side views each illustrating internal structure of the connector for electrical connection 1 of the present embodiment. The connector for electrical connection 1 includes the contact 13, a link 14, the locking lever 15, a rack 19, pinions 20 and 21, a micro switch 22, a solenoid device 24, a release lever 26, a lever 47 and the case 10.

The case 10 is formed by combining a pair of halved case pieces with each other, and includes: a tubular part 11 having a tubular shape extending in the front and back direction; and a grip 12 integrally formed at a rear end of the tubular part 11. The tubular part 11 is provided at an upper and front portion thereof with an opening 111 for allowing exposure of the locking lever 15. The opening 111 extends in the front and back direction (left and right direction in FIG. 3). In addition, the tubular part 11 is provided at a lower and front portion thereof with a slit 113 opening along the front and back direction and allowing movement of a stopper 27 within the slit 113.

Further, the tubular part 11 is provided at an upper and rear portion thereof with a hole 112 for allowing exposure of a release button 23. In addition, the tubular part 11 is provided in an inner surface thereof with a groove 114 (guide) allowing movement of a third shaft 16 connecting the link 14 and the locking lever 15 in the front and back direction within the groove 114. Note that, a tube-shaped rubber bush 29 is attached to a rear end of the grip 12, and the electric cable CB1 extends outside through the rubber bush 29.

The contact 13 is, for example, made of synthetic resin to have a tubular shape, and placed at an end (front end) of the tubular part 11 of the case 10. The contact pin 44 having a column shape extending in the front and back direction is placed in an internal space of the contact 13, and a coil spring 45 is placed around the contact pin 44. Further, a disk-shaped insulation cap 46 is attached to a front end of the coil spring 45.

The insulation cap 46 is provided at a center thereof with a hole (not shown) for allowing passage of the contact pin 44, and the contact pin 44 is configured to be exposed forward in response to extension of the coil spring 45. When the connector for electrical connection 1 is not connected to the inlet, as shown in FIG. 3, a front surface of the contact pin 44 is covered with the insulation cap 46 in order that a user may not get a shock by touching the contact pin 44. The contact pin 44 is connected to an output terminal of the electric power unit 3 via the contact part 38 and the electric cable CB1.

The link 14 is formed into a plate shape elongated in the upward and downward direction and has a lower end attached to the case 10 via a second shaft 17. The link 14 has a middle portion connected to a rear end of the contact 13 via a first shaft 18, and is configured to rotate together with movement of the contact 13. Further, the link 14 has an upper end connected to the locking lever 15 via the third shaft 16.

The locking lever 15 is used for fixing the connector for electrical connection 1 to the inlet 4 of the electric motor vehicle 2. The locking lever 15 is formed into a plate shape elongated in the front and back direction, and has a middle portion connected to the link 14 via the third shaft 16. The locking lever 15 has the hook part 151 projecting upward and a hook part 152 projecting downward at a front end and a rear end of the locking lever 15, respectively.

The locking lever 15 is applied a clockwise (right-hand turning) elastic force to by a torsion spring (not shown). When the connector for electrical connection 1 is not connected to the inlet 4, the hook part 152 is caught by a protrusion 115 of the tubular part 11 such that clockwise rotation of the locking lever 15 is suppressed.

The rack 19 is formed into a rectangular plate shape elongated in the front and back direction and is provided at a lower and rear portion thereof with a plurality of cogs 191 arranged in the front and back direction. The rack 19 is attached to the rear end of the contact 13 and is allowed to move in the front and back direction together with movement of the contact 13.

The pinion 20 includes a toothed gear formed into a disk shape and is provided at an entire periphery thereof with cogs 201 to mesh with the cogs 191 of the rack 19. As with the pinion 20, the pinion 21 includes a toothed gear formed into a disk shape and is provided at an entire periphery thereof with cogs 211 to mesh with the cogs 201 of the pinion 20.

In the present embodiment, the above-described contact part 38 is configured to be opened or closed with rotation of the pinion 21, and the pinion 21 constitutes a handle. Further, in the present embodiment, the pinion 20 and the pinion 21 are designed to have the same number of cogs.

The micro switch 22 is directly pushed by the contact 13 coming into the case 10, and accordingly detects that the contact 13 has reached a predetermined position in the case 10. When the micro switch 22 is turned on, a contact point (not shown) placed inside the micro switch 22 is turned on, and accordingly, a drive signal is sent to the solenoid device 24.

The release button 23 is placed such that an apical end thereof is exposed outside through the hole 112 of the case 10, and is applied an upward elastic force to by a coil spring 25 placed under the release button 23. The release lever 26 having a plate shape elongated in the front and back direction is attached to a front end of the release button 23, and is provided at a middle portion of the release lever 26 in the front and back direction with a stepped part 261. Further, the release lever 26 is provided on a base end side (side closer to the release button 23) thereof with a hook part 262 projecting upward.

In this regard, in the present embodiment, as shown in FIG. 1A, the rear wall of the stepped part 261 of the release lever 26 is inclined backward and upward to leave a steep edge at an upper rear end of the stepped part 261, and therefore the locking lever 15 can be more tightly held, compared with a case where the rear wall of the stepped part 261 is vertical.

In a conventional power feeding connector, a link suppresses a locking member from moving in a direction of detaching the conventional power feeding connector from an inlet. However, in the present embodiment, the spring force of the torsion spring by itself suppresses movement of the locking lever 15. Therefore, the locking lever 15 can be moved in the upward and downward direction even when the link 14 is situated in a betwixt and between position. Accordingly, even when the link 14 is situated in a betwixt and between position for any reason, the locking lever 15 is unlikely to be broken by being pressed against the inlet 4 or the like by force.

The solenoid device 24 includes a pin 241 configured to freely move in the front and back direction, and the pin 241 prevents the release button 23 from being pressed, when the pin 241 is moved forward. In the solenoid device 24, the pin 241 is configured to be moved forward by a drive signal outputted from the above-mentioned micro switch 22 and be retracted by a charge completion signal outputted from the electric motor vehicle 2.

The stopper 27 includes a pin and is allowed to move in the front and back direction within the slit 113. A coil spring 30 (see FIG. 1A) is situated on the stopper 27, and applies a downward elastic force to the stopper 27. Therefore, when the connector for electrical connection 1 is not connected to the inlet 4, a lower end of the stopper 27 is exposed out of the case 10 (see FIG. 3).

The lever 47 includes a pair of arms 471 and 472 each extending in the front and back direction, and is rotatably attached to the case 10. Further, the lever 47 is applied a counterclockwise elastic force to by a torsion spring (not shown).

Next, the following explanations referring to FIGS. 1A to 1D are made to operation of the connector for electrical connection 1.

As shown in FIG. 1A, when the contact 13 does not reach a predetermined position in the recess 411 of the inlet 4, the stopper 27 suppresses movement of the contact 13. Therefore, the link 14 connected to the contact 13 does not rotate, and the third shaft 16 attached to the upper end of the link 14 is positioned at a left end of the groove 114. At this time, the hook part 152 of the locking lever 15 is caught by the protrusion 115 of the case 10, and the hook part 151 formed at a front end of the locking lever 15 stays inside the case 10.

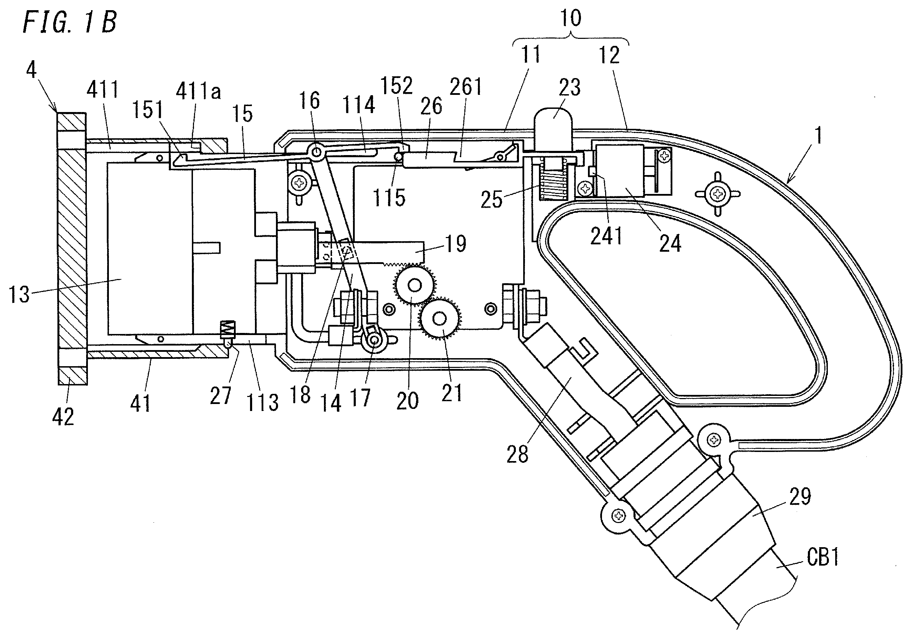

As shown in FIG. 1B, when the contact 13 reaches the predetermined position in the recess 411 of the inlet 4, the stopper 27 comes into contact with an edge of the opening of the main body 41 and moves upward against a spring force of the coil spring 30. Accordingly, suppression of movement of the contact 13 performed by the stopper 27 is cancelled and accordingly the contact 13 is allowed to move backward, when viewed from the case 10.

Before the contact 13 reaches the above predetermined position, movement of the contact 13 is suppressed, and therefore the contact 13 is pushed toward the inlet 4. Thereby, the contact pin 44 of the contact 13 is slid and inserted into the power feeding socket 43, and accordingly the contact 13 is electrically connected to the inlet 4. The above-mentioned predetermined position is a position where suppression of movement of the contact 13 is cancelled, and is also a position where the stopper 27 comes into contact with the edge of the opening of the main body 41 of the inlet 4.

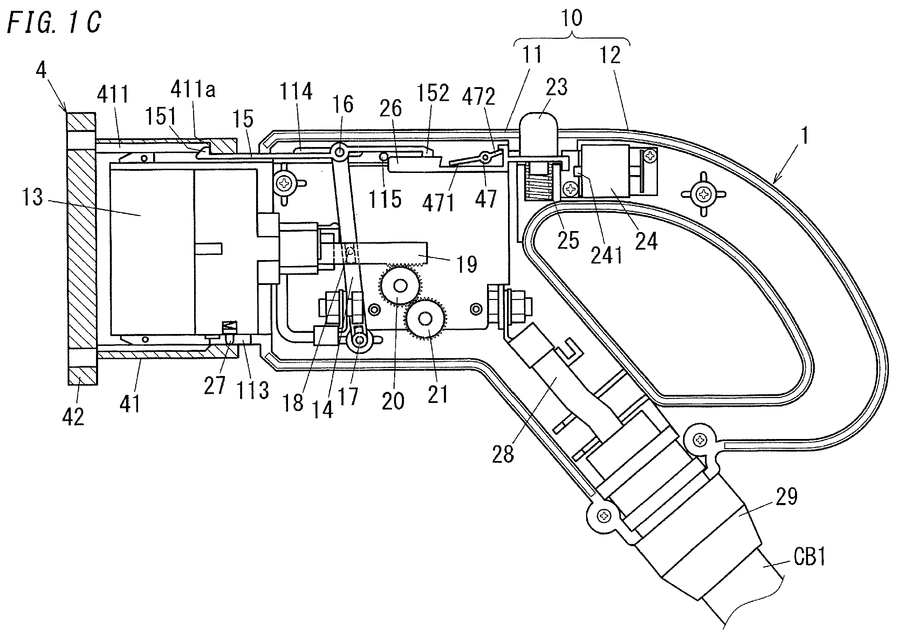

As shown in FIG. 1C, when the case 10 is pushed toward the inlet 4 (leftward in FIG. 1C), the contact 13 moves toward the case 10 (rightward in FIG. 1C) due to contact resistance between the contact pin 44 and the power feeding socket 43. At this time, the link 14 connected to the contact 13 rotates clockwise about the second shaft 17, the third shaft 16 attached to the upper end of the link 14 moves backward within the groove 114, and accordingly the locking lever 15 also moves backward, when viewed from the case 10.

However, in the present embodiment, the contact 13 and the link 14 are connected to each other. Therefore, unless the contact 13 reaches a bottom of the recess 41 of the inlet 4 or there is huge contact resistance between the contact 44 and the power feeding socket 43, the contact 13 also goes forward little by little.

In addition, at this time, the hook part 152 of the locking lever 15 is separated from the protrusion 115 of the case 10, and accordingly the locking lever 15 rotates clockwise about the third shaft 16 and the hook part 151 of the locking lever 15 is caught by the stepped part 411a of the recess 411 of the inlet 4. At this time, the rack 19 attached to the contact 13 also moves backward, when viewed from the case 10, and accordingly the pinion 20 meshing with the rack 19 rotates clockwise, and the pinion 21 meshing with the pinion 20 rotates counterclockwise.

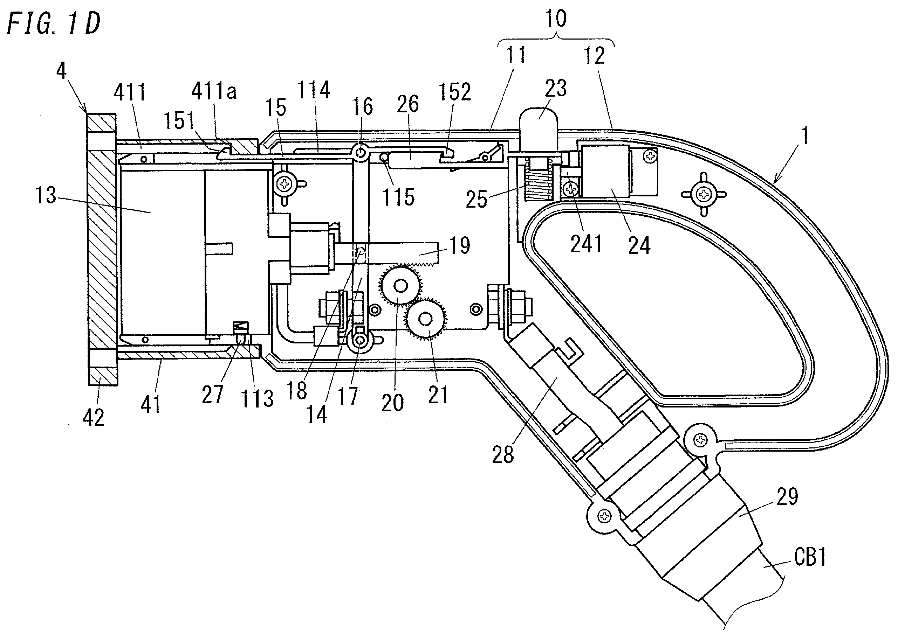

As shown in FIG. 1D, when the case 10 is further pushed toward the inlet 4, the contact 13 further moves toward the case 10 due to contact resistance between the contact pin 44 and the power feeding socket 43. At this time, the link 14 further rotates clockwise and accordingly the third shaft 16 attached to the link 14 also further moves backward within the groove 114, and the locking lever 15 also further moves backward, when viewed from the case 10, together with movement of the third shaft 16. In addition, at this time, the hook part 152 of the locking lever 15 is also caught by the stepped part 261 of the release lever 26.

Further, at this time, the rack 19 attached to the contact 13 also further moves backward, when viewed from the case 10, and accordingly the pinion 20 meshing with the rack 19 also further rotates clockwise and the pinion 21 meshing with the pinion 20 also further rotates counterclockwise. As a result, the contact points 38a of the contact part 38 are closed by the pinion 21, and power supply from the electric power unit 3 to the electric motor vehicle 2 is started. Note that the third shaft 16 is positioned at a right end of the groove 114 of the case 10 and therefore the contact 13 is not allowed to further move toward the case 10.

Further, at this time, the contact 13 which has moved backward, when viewed from the case 10, turns on the micro switch 22, a drive signal outputted from the micro switch 22 activates the solenoid device 24, and the pin 241 is moved forward. In this state, the release button 23 cannot be pushed down, and therefore even when the release button 23 is operated by mistake, it is possible to prevent the connector for electrical connection 1 from being detached from the inlet 4. In this regard, the position of the pinion 21 shown in FIG. 1A corresponds to a first position, and the position of the pinion 21 shown in FIG. 1D corresponds to a second position.

In FIG. 4, the connector for electrical connection 1 is being inserted into the inlet 4 and, in this state, the coil spring 45 is compressed in the front and back direction and applies a backward elastic force to the contact 13. Further, in this state, the contact pin 44 of the contact 13 is in contact with an inner surface of the power feeding socket 43 of the inlet 4 such that the contact 13 and the inlet 4 are electrically connected to each other.

Both the contact 13 and the case 10 move forward (toward the inlet 4) until the connector for electrical connection 1 reaches a regular position (position shown in FIG. 4) of the inlet 4.

Next, when electric charge to the electric motor vehicle 2 is completed, the charge completion signal outputted from the electric motor vehicle 2 activates the solenoid device 24, and the pin 241 is retracted backward. Accordingly, it becomes possible to push down the release button 23. When the release button 23 is pushed down against an elastic force of the coil spring 25, the release lever 26 attached to the release button 23 moves downward, and as a result, the hook part 152 of the locking lever 15 is separated from the stepped part 261 of the release lever 26.

At this time, the hook part 262 of the release lever 26 also moves downward and pushes the back arm 472 of the lever 47 downward, and therefore the lever 47 rotates clockwise. Further, the front arm 471 of the lever 47 pushes the hook part 152 of the locking lever 15 upward, and thereby the locking lever 15 rotates counterclockwise and the hook part 151 is separated from the stepped part 411a.

When the case 10 is pulled backward while the hook part 151 is separated from the stepped part 411a, the third shaft 16 moves forward within the groove 114 with respect to the case 10, and the link 14 rotates counterclockwise about the second shaft 17 together with the movement of the third shaft 16. In addition, the locking lever 15 moves forward, when viewed from the case 10, together with the movement of the third shaft 16, the hook part 152 of the locking lever 15 is caught by the protrusion 115 of the case 10, and thereby the hook part 151 is retracted into the case 10.

At this time, together with the rotation of the link 14, the contact 13 also moves forward, when viewed from the case 10. Further, at this time, the rack 19 attached to the contact 13 also moves forward, when viewed from the case 10, and the pinion 20 meshing with the rack 19 rotates counterclockwise. Further, the pinion 21 meshing with the pinion 20 rotates clockwise to open the contact points 38a of the contact part 38, and thereby power supply from the electric power unit 3 to the electric motor vehicle 2 is stopped.

As described above, when the connector for electrical connection 1 is connected to the inlet 4, the contact 13 moves toward the case 10, when viewed from the case 10 pushed toward the inlet 4, and therefore it is possible to reduce a force which a user is required to apply to the case 10. That is, a force to be applied to the case 10 can be reduced to be less than a sum of a force applied to the contact 13 by the inlet 4 and a force applied to the handle (the pinion 21) at the time of closing of the contact part 38.

Until the contact 13 reaches the predetermined position (the position where the stopper 27 comes into contact with the edge of the opening of the main body 41 of the inlet 4) in the recess 411 of the inlet 4, the stopper 27 suppresses the contact 13 from moving toward the case 10. Therefore, by a force applied to the case 10 in this period, it is possible to perform secure electrical connection to the inlet 4.

In the present embodiment, the locking lever 15 and the link 14 are, via the third shaft 16, connected to each other and attached to the case 10. Therefore, compared with a case where a shaft for attaching the locking lever 15 to the case 10 is formed separately from a shaft for attaching the link 14 to the case 10, it is possible to reduce the number of parts and accordingly suppress cost increases. In addition, as with the present embodiment, when the rack 19 and the pinions 20 and 21 are used, it is possible to perform operation by transmitting a force more effectively, compared with a case where operation is performed by use of one handle.

The connector for electrical connection 1 of the present embodiment has such a structure that the contact 13 is slidable in the front and back direction with respect to the case 10. That is, the number of sliding portions can be reduced, compared with conventional power feeding connectors. Therefore, even when the case 10 is distorted, for example, possibilities of operation failure can be more reduced, compared with the conventional power feeding connectors. Further, by reducing the number of sliding portions, a frictional force can be reduced, and accordingly a force required to push the case 10 can be reduced. Further, compared with conventional examples, it is possible to reduce the number of parts and achieve cost reduction.

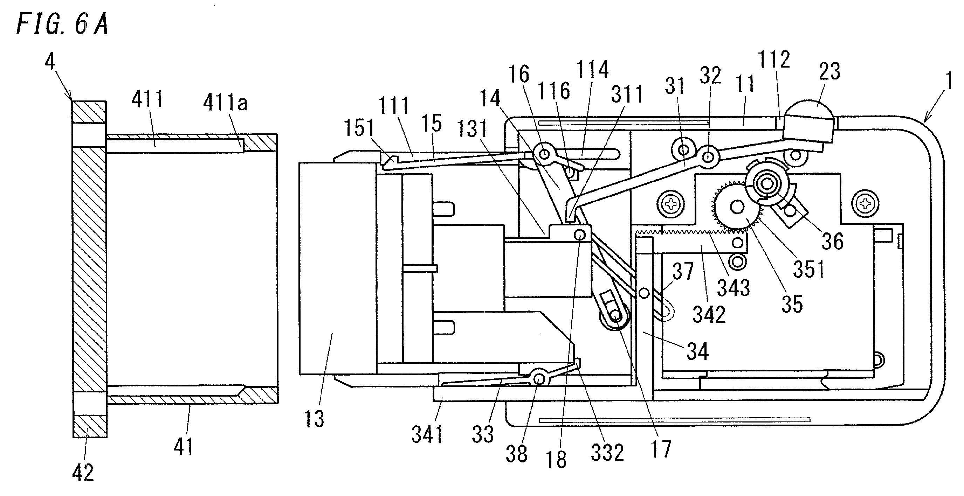

Next, the following explanations referring to FIGS. 6A to 6D are made to another connector for electrical connection 1 of the present embodiment. Note that, components same as those shown in FIGS. 1A to 4 are designated by the same reference numerals and detailed explanations thereof are omitted. Also, in FIGS. 6A to 6D, the above-mentioned grip is omitted, and only a tubular part 11 is shown.

The connector for electrical connection 1 includes a contact 13, a link 14, a locking lever 15, a rack 34, a pinion 35, a handle 36, a micro switch (not shown), a solenoid device (not shown), a release lever 31 and a stopper 33.

The locking lever 15 is formed into a plate shape elongated in the front and back direction and has a middle portion connected to the link 14 via a third shaft 16. The locking lever 15 is applied a clockwise (right-hand turning) elastic force to by a torsion spring (not shown). When the connector for electrical connection 1 is not connected to an inlet 4, a rear end part of the locking lever 15 is caught by a protrusion 116 of a tubular part 11 such that clockwise rotation of the locking lever 15 is suppressed.

The rack 34 includes: a bearing member 341 having an L shape; and a rack main body 342 extending backward from an apical end (upper end) of the bearing member 341, and the rack main body 342 has cogs 343 arranged along its entire length in an upper surface thereof. The rack 34 is connected to a rear end of the contact 13 via a link 37, moves backward by a force applied by the inlet 4 and moves forward by being pulled forward by the contact 13.

The pinion 35 includes a toothed gear having a disk shape, and is provided at an entire periphery thereof with cogs 351 to mesh with the cog 343 of the rack main body 342. The pinion 35 is provided on a side surface thereof with a toothed gear (not shown) which has a small outside diameter and is integrally formed with the pinion 35. The handle 36 includes a toothed gear (not shown) having a larger outer diameter than that of the above-mentioned toothed gear formed integrally with the pinion 35, and is configured to rotate by mesh of the toothed gears so as to open or close contact points 38a of a contact part 38.

The release lever 31 is formed into a plate shape elongated in the front and back direction, and is provided at a front end thereof with a hook part 311 projecting downward, and a rear end of the release lever 31 is attached to the release button 23. The release lever 31 has a middle portion connected to a case 10 via a shaft 32 and is applied a counterclockwise elastic force to by a torsion spring (not shown).

The stopper 33 is formed into a plate shape elongated in the front and back direction, and is provided at a front end and a rear end thereof with a hook part 331 projecting downward and a hook part 332 projecting upward, respectively. The stopper 33 has a middle portion connected to the case 10 via a shaft 38 and is applied a counterclockwise elastic force to by a torsion spring (not shown).

Next, the following explanations referring to FIGS. 6A to 6D are made to operation of the connector for electrical connection 1.

As shown in FIG. 6A, while the contact 13 is not being inserted in a recess 411 of the inlet 4, the hook part 332 of the stopper 33 is caught by the rear end of the contact 13 and accordingly movement of the contact 13 backward is suppressed. Therefore, the link 14 connected to the contact 13 does not rotate and the third shaft 16 attached to an upper end of the link 14 is positioned at a left end of a groove 114. In this state, a rear end portion of the locking lever 15 is caught by the protrusion 116 of the case 10, and a hook part 151 formed at a front end of the locking lever 15 stays inside the case 10.

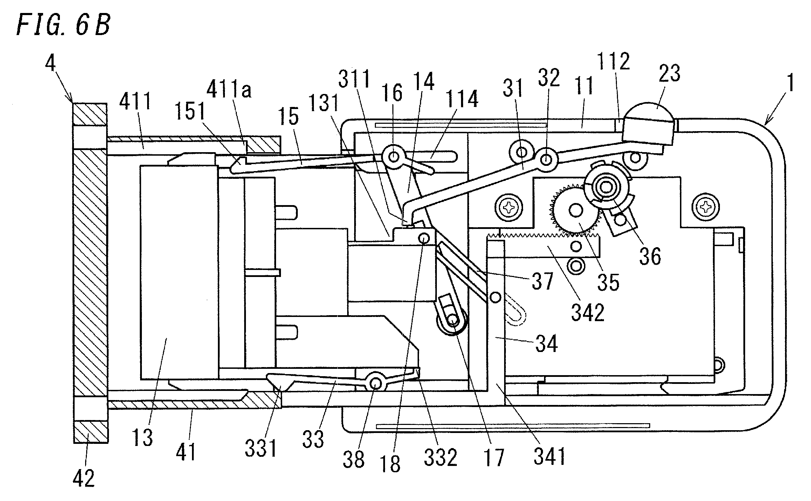

As shown in FIG. 6B, when the contact 13 is inserted to a predetermined position in the recess 411 of the inlet 4, the hook part 331 of the stopper 33 comes into contact with an edge of an opening of a main body 41, and the stopper 33 rotates clockwise against the spring force of the torsion spring. Thereby, the hook part 332 of the stopper 33 is separated from the rear end of the contact 13 such that the contact 13 is allowed to move backward, when viewed from the case 10.

Before the contact 13 reaches the above predetermined position, movement of the contact 13 is suppressed and therefore the contact 13 is pushed toward the inlet 4. Thereby, a contact pin 44 of the contact 13 is slid and inserted into a power feeding socket 43 and accordingly the contact 13 and the inlet 4 are electrically connected to each other. In this regard, the above predetermined position is a position where suppression of movement of the contact 13 backward is cancelled, and is also a position where the hook part 331 of the stopper 33 comes into contact with the edge of the opening of the main body 41 of the inlet 4.

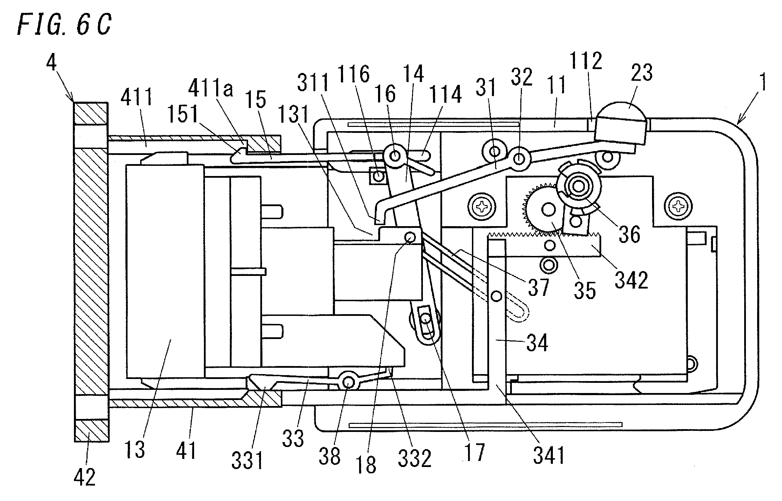

As shown in FIG. 6C, when the case 10 is pushed toward the inlet 4 (leftward in FIG. 6C), the contact 13 moves toward the case 10 (rightward in FIG. 6C) due to contact resistance between a contact pin (not shown) and a power feeding socket (not shown). At this time, the link 14 connected to the contact 13 rotates clockwise about a second shaft 17 and the third shaft 16 attached to the upper end of the link 14 moves backward within the groove 114, and thereby the locking lever 15 also moves backward, when viewed from the case 10.

At this time, the rear end part of the locking lever 15 is separated from the protrusion 116 of the case 10, and accordingly the locking lever 15 rotates clockwise about the third shaft 16 and the hook part 151 of the locking lever 15 is caught by a stepped part 411a of the recess 411 of the inlet 4. At this time, the bearing member 341 of the rack 34 is pushed backward by a force applied by the inlet 4 and accordingly the rack main body 342 moves backward, when viewed from the case 10. Movement of the rack main body 342 backward leads to counterclockwise rotation of the pinion 35 meshing with the rack main body 342 and clockwise rotation of the handle 36 meshing with the pinion 35.

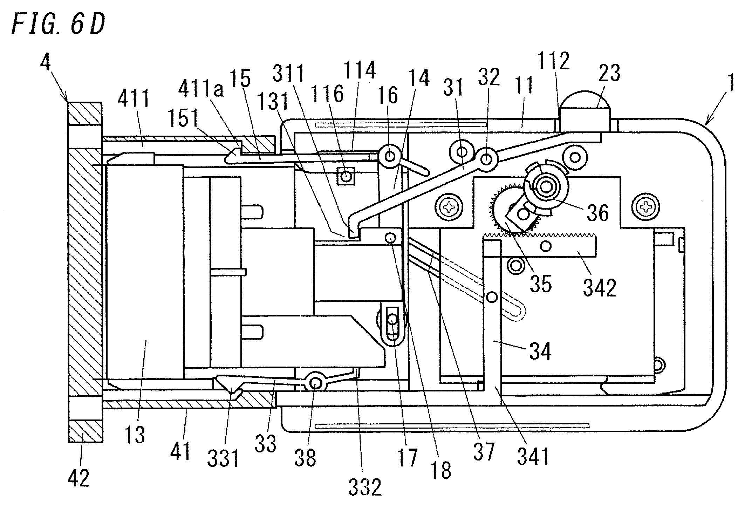

As shown in FIG. 6D, when the case 10 is further pushed toward the inlet 4, the contact 13 further moves toward the case 10 due to contact resistance of a contact pin (not shown) and a power feeding socket (not shown). At this time, the link 14 further rotates clockwise and thereby the third shaft 16 attached to the link 14 also further moves backward within the groove 114, and the locking lever 15 also further moves backward, when viewed from the case 10, together with movement of the third shaft 16. At this time, the hook part 311 of the release lever 31 is caught by a stepped part 131 formed in a vicinity of the rear end of the contact 13.

Further, at this time, by a force applied by the inlet 4, the bearing member 341 further moves backward, when view from the case 10, and accordingly the pinion 35 meshing with the rack main body 342 also further rotates counterclockwise, and a handle 36 meshing with the pinion 35 also further rotates clockwise. As a result, the contact points 38a of the contact part 38 are closed by the handle 36, and power supply from an electric power unit 3 to an electric motor vehicle 2 is started. Note that, in this state, the third shaft 16 is positioned at a right end of the groove 114 of the case 10 and therefore the contact 13 is not allowed to further move toward the case 10.

Further, at this time, the contact 13 turns on a micro switch (not shown), a drive signal outputted from the micro switch activates a solenoid device (not shown), and the pin is moved forward. In this state, a release button 23 cannot be pushed down, and therefore even when the release button 23 is operated by mistake, it is possible to prevent the connector for electrical connection 1 from being detached from the inlet 4. In this regard, the position of the handle 36 shown in FIG. 6A corresponds to a first position, and the position of the handle 36 shown in FIG. 6D corresponds to a second position.

Next, when electric charge to the electric motor vehicle 2 is completed, a charge completion signal outputted from the electric motor vehicle 2 activates the solenoid device, and the pin is retracted backward. Accordingly, it becomes possible to operate the release button 23. When the release button 23 is pushed down against an elastic force of a torsion spring, the release lever 31 attached to the release button 23 rotates clockwise about the shaft 32, and as a result, the hook part 311 of the release lever 31 is separated from the stepped part 131 of the contact 13.

At this time, the release lever 31 pushes up a rear end of the locking lever 15, and thereby the locking lever 15 rotates counterclockwise and the hook part 151 is separated from the stepped part 411a.

When the case 10 is pulled backward while the hook part 151 is separated from the stepped part 411a, the third shaft 16 moves forward with respect to the case 10 within the groove 114 and the link 14 rotates counterclockwise about the second shaft 17 together with the movement of the third shaft 16. Further, the locking lever 15 moves forward, when viewed from the case 10, together with the movement of the third shaft 16, and a hook part 152 of the locking lever 15 is caught by the protrusion 115 of the case 10, and thereby the hook part 151 is retracted into the case 10.

At this time, together with the rotation of the link 14, the contact 13 also moves forward, when viewed from the case 10. Further, the rack 34 connected to the contact 13 via the link 37 also moves forward, when viewed from the case 10, and the pinion 35 meshing with the rack main body 342 of the rack 34 rotates clockwise. Also, the handle 36 meshing with the pinion 35 rotates counterclockwise to open the contact points 38a of the contact part 38, and thereby power supply from the electric power unit 3 to the electric motor vehicle 2 is stopped.

As described above, when the connector for electrical connection 1 is connected to the inlet 4, the contact 13 moves toward the case 10, when viewed from the case 10 to be pushed toward the inlet 4, and therefore it is possible to reduce a force which a user is required to apply to the case 10. That is, a force to be applied to the case 10 can be reduced to be less than a sum of a force applied to the contact 13 by the inlet 4 and a force applied to the handle 36 at the time of closing of the contact part 38.

When the contact 13 does not reach the predetermined position (the position where the hook part 331 of the stopper 33 comes into contact with the edge of the opening of the recess 411 of the inlet 4) in the recess 411 of the inlet 4, the stopper 33 suppresses the contact 13 from moving toward the case 10. Therefore, by a force applied to the case 10 in this period, it is possible to perform secure electrical connection to the inlet 4.

In the present embodiment, the locking lever 15 and the link 14 are, via the third shaft 16, connected to each other and attached to the case 10. Therefore, compared with a case where a shaft for attaching the locking lever 15 to the case 10 is formed separately from a shaft for attaching the link 14 to the case 10, it is possible to reduce the number of parts and accordingly suppress cost increases. In addition, in the present embodiment, the toothed gear attached to the handle 36 has a larger outer diameter than that of the toothed gear integrally formed with the pinion 35 and thereby it is possible to reduce a force required to open or close the contact part 38.

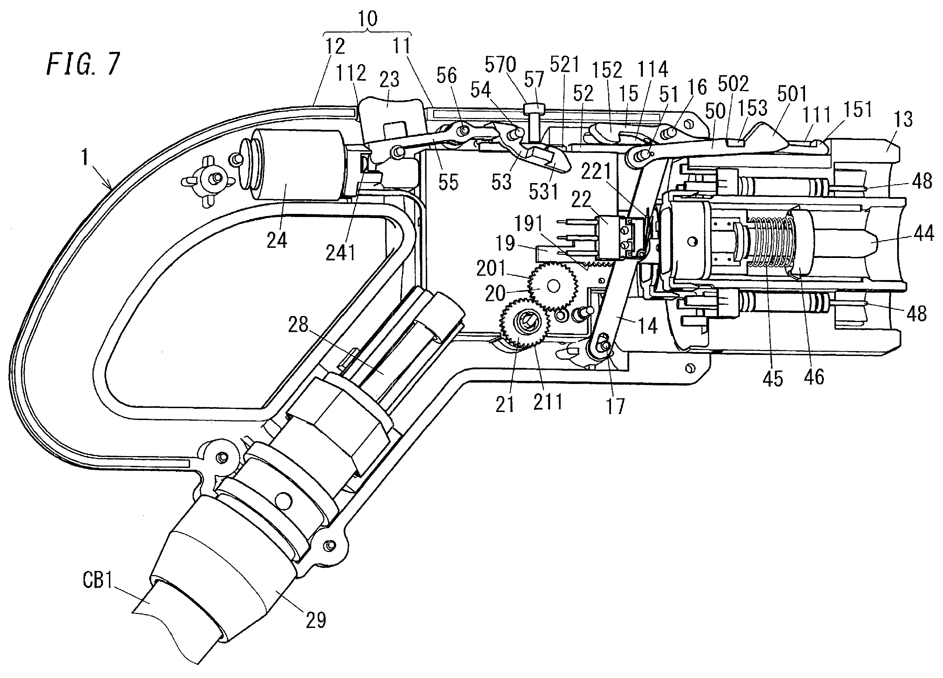

Next, the following explanations referring to FIGS. 7 to 11C are made to yet another connector for electrical connection 1 of the present embodiment. Note that, components same as those shown in FIGS. 1A to 4 are designated by the same reference numerals and explanations thereof are omitted.

As shown in FIG. 7, the connector for electrical connection 1 includes a contact 13, a link 14, a locking lever 15, a rack 19, pinions 20 and 21, a micro switch 22 and a solenoid device 24. Further, the connector for electrical connection 1 includes a stopper 50, a slide lever 52, release levers 53 and 55, a pin 57 and a case 10.

The stopper 50 is formed into a plate shape elongated in a front and back direction, and is rotatably borne by a shaft 51 which is situated at a rear end (left end in FIG. 7) of the stopper 50 and attached to the case 10. The stopper 50 is provided at a front end (right end in FIG. 7) thereof with a protrusion 501 integrally formed with the stopper 50 and projecting upward. The stopper 50 is provided behind the protrusion 501 in a longitudinal direction (front and back direction) thereof with a recess 502 to catch a protrusion 153 formed at a middle portion in a longitudinal direction of the locking lever 15. Note that the stopper 50 is applied a counterclockwise elastic force to by a torsion spring (not shown).

The slide lever 52 is formed into a plate shape elongated in the front and back direction and is connected to the link 14 and the locking lever 15 via a third shaft 16 at a front end (right end in FIG. 7) of the slide lever 52. That is, the slide lever 52 can move in the front and back direction together with the link 14 and the locking lever 15. The slide lever 52 is provided at a middle portion in a longitudinal direction (front and back direction) thereof with a recess 521 in which a front end (an end) of the release lever 55 is fitted when the connector for electrical connection 1 is connected to an inlet 4.

The release lever 53 is formed into a plate shape elongated in the front and back direction and is rotatably borne by a shaft 54, which is attached to the case 10, at a rear end (left end in FIG. 7) of the release lever 53. The release lever 53 is provided at a front end (right end in FIG. 7) thereof with a hook part 531 integrally formed with the release lever 53 and projecting upward. Note that the release lever 53 is applied a counterclockwise elastic force to by a torsion spring (not shown).

The release lever 55 is, as with the release lever 53, formed into a plate shape elongated in the front and back direction and is rotatably borne by a shaft 56, which is attached to the case 10, at a middle portion in a longitudinal direction (front and back direction) of the release lever 55. The release lever 55 is placed such that a rear end (left end in FIG. 7) thereof is situated under a release button 23, and rotates counterclockwise when the release button 23 is pushed down. Note that the release lever 55 is applied a clockwise elastic force to by a torsion spring (not shown).

The pin 57 is a special screw which cannot be turned with an ordinary tool (e.g. a cross slot screwdriver, and a hexagon wrench) and is provided in a head 570 (see FIG. 7) with a pentagon-shaped hole, for example. A shape of the hole formed in the head 570 is not limited to a pentagon, but may be another shape as long as the shape does not allow the pin 57 to be turned with an ordinary tool.

For example, in a case where the release button 23 cannot be operated due to failure of the solenoid device 24, the pin 57 is used for forcibly moving the release lever 53 in a direction (downward) of detaching the release lever 53 from the locking lever 15. That is, the pin 57 is not used while the solenoid device 24 normally functions. Operation is described later.

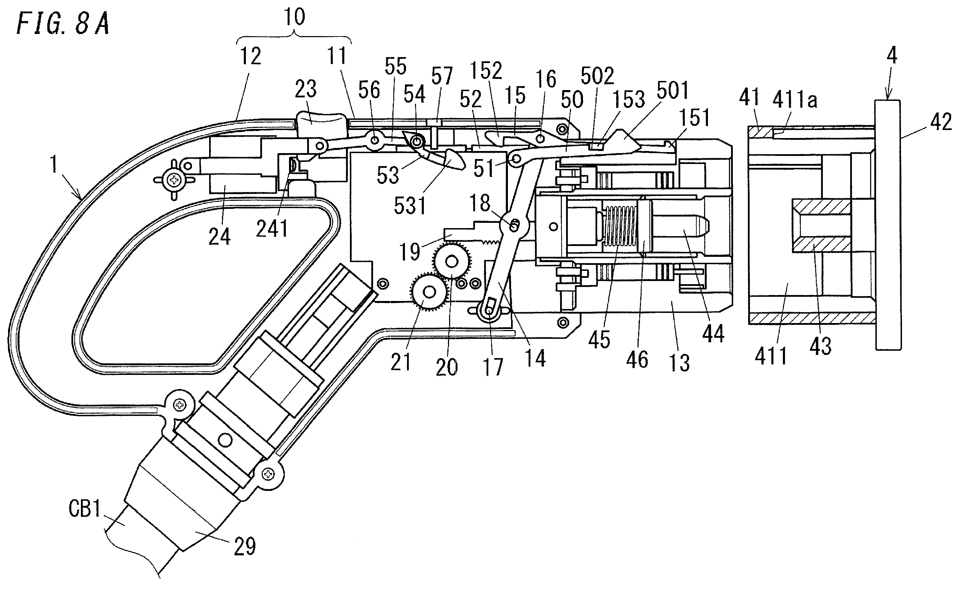

Next, the following explanations referring to FIGS. 8A to 8D are made to operation of the connector for electrical connection 1.

As shown in FIG. 8A, when the contact 13 does not reach a predetermined position in a recess 411 of the inlet 4, the protrusion 153 of the locking lever 15 is fitted in the recess 502 of the stopper 50, and thereby movement of the locking lever 15 backward is suppressed. Therefore, the link 14 connected to the locking lever 15 does not rotate either and the third shaft 16 attached to the upper end of the link 14 is positioned at a right end of a groove 114 (see FIG. 7).

In this state, a hook part 151 of the locking lever 15 stays inside the case 10. At this time, the rack 19 connected to the link 14 via a first shaft 18 is also prevented from moving backward, and the contact 13 attached to the rack 19 is also prevented from moving backward. Further, a front end of the release lever 55 is in contact with a rear end of the release lever 53 to suppress counterclockwise rotation of the release lever 53.

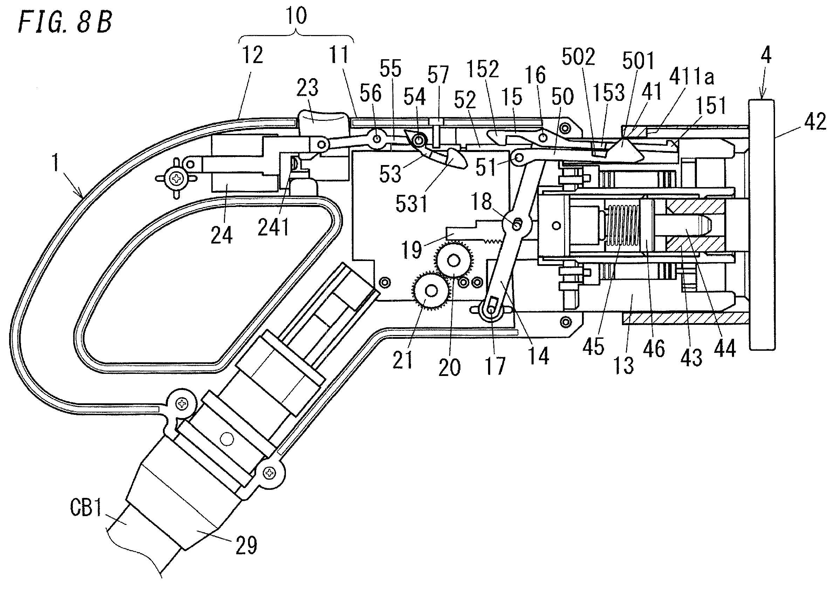

As shown in FIG. 8B, when the contact 13 is inserted to the predetermined position in the recess 411 of the inlet 4, the protrusion 501 of the stopper 50 comes into contact with an edge of an opening of a main body 41, and the stopper 50 rotates clockwise about the shaft 51. Thereby, the protrusion 153 of the locking lever 15 goes out of the recess 502 of the stopper 50, and suppression of the locking lever 15 made by the stopper 50 is cancelled.

Before the contact 13 reaches the above predetermined position, movement of the contact 13 is suppressed by the rack 19 and therefore the contact 13 is pushed toward the inlet 4. Thereby, a contact pin 44 of the contact 13 is slid and inserted into a power feeding socket 43 and accordingly the contact 13 and the inlet 4 are electrically connected to each other. In this regard, the above predetermined position is a position where suppression of movement of the contact 13 backward is cancelled, and is also a position where the protrusion 501 of the stopper 50 comes into contact with the edge of the opening of the main body 41 of the inlet 4.

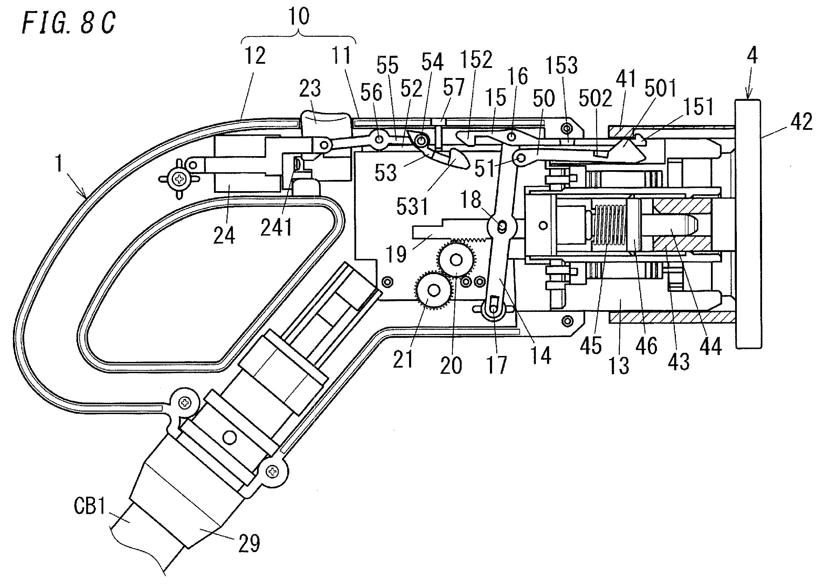

As shown in FIG. 8C, when the case 10 is pushed toward the inlet 4 (rightward in FIG. 8C), the contact 13 moves toward the case 10 (leftward in FIG. 8C) due to contact resistance between the contact pin 44 and the power feeding socket 43. At this time, the rack 19 moves backward, when viewed from the case 10, by being pushed backward by the contact 13, and accordingly the link 14 rotates counterclockwise about a second shaft 17. Together with the rotation of the link 14, the third shaft 16 moves backward within the groove 114, and therewith the locking lever 15 moves backward, when viewed from the case 10.

At this time, the locking lever 15 moves backward on an upper surface of the stopper 50, and accordingly the hook part 151 of the locking lever 15 is caught by a stepped part 411a of the recess 411 of the inlet 4. Further, at this time, together with the movement of the rack 19 backward, the pinion 20 meshing with the rack 19 rotates counterclockwise and therewith the pinion 21 meshing with the pinion 20 rotates clockwise.

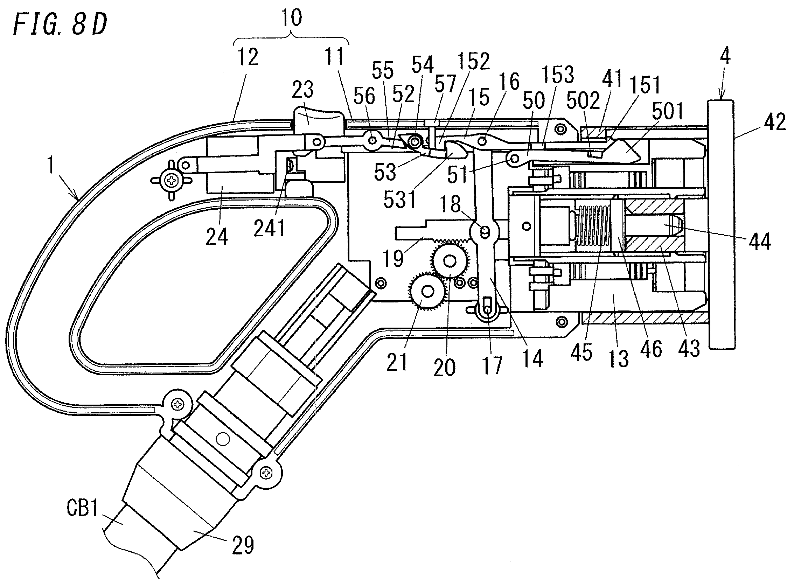

As shown in FIG. 8D, when the case 10 is further pushed toward the inlet 4, the contact 13 further moves toward the case 10 due to contact resistance between the contact pin 44 and the power feeding socket 43. At this time, the rack 19 further moves backward, when viewed from the case 10, by being pushed by the contact 13, and accordingly the link 14 connected to the rack 19 via the first shaft 18 further rotates counterclockwise. Further, together with the rotation of the link 14, the third shaft 16 further moves backward within the groove 114 and therewith the locking lever 15 further moves backward, when viewed from the case 10.

At this time, the slide lever 52 also moves backward, and accordingly a front end of the release lever 55 is fitted in the recess 521 formed in the slide lever 52. Thereby, the release lever 53 loses a retention force and rotates counterclockwise about the shaft 54, and accordingly the hook part 531 of the release lever 53 is caught by a hook part 152 of the locking lever 15.

At this time, together with movement of the rack 19 backward, the pinion 20 meshing with the rack 19 further rotates counterclockwise and therewith the pinion 21 meshing with the pinion 20 rotates clockwise. As a result, contact points 38a of a contact part 38 are closed by the pinion 21 and thereby power supply from an electric power unit 3 to an electric motor vehicle 2 is started. At this time, the third shaft 16 is positioned at a left end of the groove 114 of the case 10 and therefore the contact 13 is not allowed to further move toward the case 10.

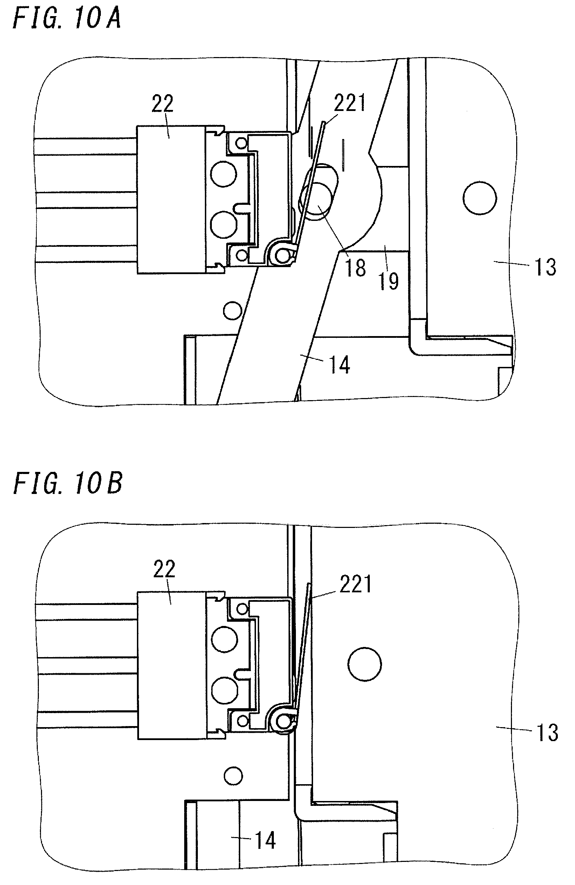

Further, at this time, as shown in FIG. 10B, the contact 13 directly pushes a lever 221 of the micro switch 22 such that a contact point (not shown) situated inside the micro switch 22 is turned on. When the contact point is turned on, the micro switch 22 outputs a drive signal to the solenoid device 24 such that a pin 241 of the solenoid device 24 is moved forward by the drive signal. In this state, the release button 23 cannot be pushed down, and therefore even when the release button 23 is operated by mistake, it is possible to prevent the connector for electrical connection 1 from being detached from the inlet 4.

In this regard, the position of the pinion 21 shown in FIG. 8A corresponds to a first position, and the position of the pinion 21 shown in FIG. 8D corresponds to a second position. The position of the locking lever 15 shown in FIG. 8A corresponds to a release position, and the position of the locking lever 15 shown in FIG. 8D corresponds to a fixing position. Note that FIG. 10A shows a position relation between the micro switch 22 and the contact 13 of the connector for electrical connection 1 which is not being connected to the inlet 4. In this state, the lever 221 of the micro switch 22 is not pressed by the contact 13 and therefore the above contact point is off.

Next, when electric charge to the electric motor vehicle 2 is completed, a charge completion signal outputted from the electric motor vehicle 2 activates the solenoid device 24, and the pin 241 is retracted backward. In this state, when the release button 23 is pushed down, a rear end of the release lever 55 positioned under the release button 23 is pushed down, and accordingly the release lever 55 rotates counterclockwise about the shaft 56.

When the release lever 55 rotates counterclockwise, a front end of the release lever 55 pushes up a rear end of the release lever 53, and thereby the release lever 53 rotates clockwise about the shaft 54, and the hook part 531 of the release lever 53 is separated from the hook part 152 of the locking lever 15.

When the case 10 is pulled backward while the hook part 531 of the release lever 53 is separated from the hook part 152 of the locking lever 15, the third shaft 16 moves forward with respect to the case 10 within the groove 114 and, together with the movement of the third shaft 16, the link 14 rotates clockwise about the second shaft 17. In addition, together with the movement of the third shaft 16, the locking lever 15 moves forward, when viewed from the case 10. Note that the locking lever 15 moves to a position where the protrusion 153 faces the recess 502 of the stopper 50 in an upward and downward direction.

At this time, the rack 19 connected to the link 14 also moves forward, when viewed from the case 10 and, together with the movement of the rack 19, the pinion 20 meshing with the rack 19 rotates clockwise. Further, at this time, the pinion 21 meshing with the pinion 20 rotates counterclockwise and accordingly the pinion 21 opens the contact points 38a of the contact part 38 such that the power supply from the electric power unit 3 to the electric motor vehicle 2 is stopped.

When the case 10 is further pulled backward such that the protrusion 501 of the stopper 50 is separated from the edge of the opening of the main body 41 of the inlet 4, the stopper 50 rotates counterclockwise by the elastic force of the torsion spring, and the protrusion 153 of the locking lever 15 is fitted in the recess 502 of the stopper 50. Thereby, movement of the rack 19 connected to the locking lever 15 is suppressed, and accordingly the contact 13 moves backward along with the case 10 such that the connector for electrical connection 1 is detached from the inlet 4.

In the present embodiment, the release button 23 constitutes an operation part, and the release lever 53 constitutes a release part.

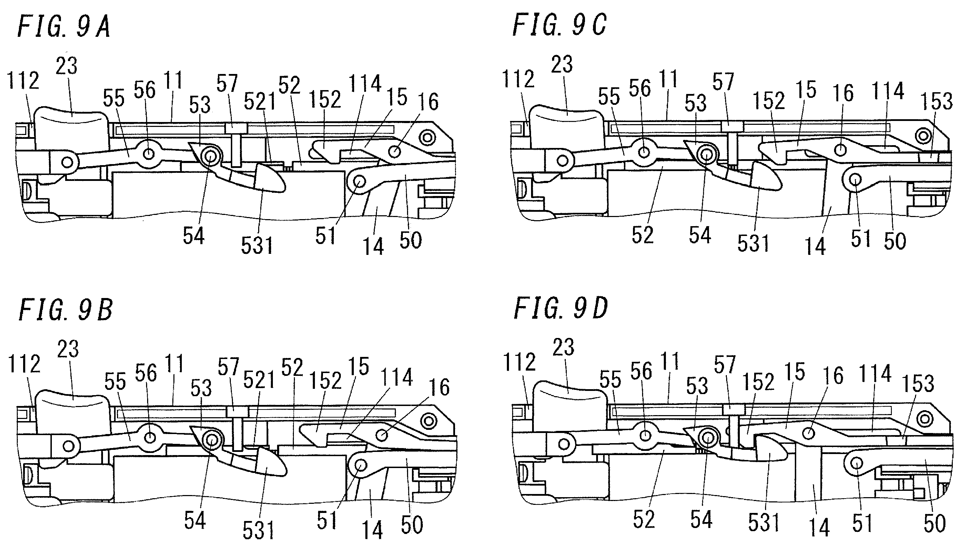

FIGS. 9A to 9D are enlarged views each illustrating the primary part of the connector for electrical connection 1. As shown in FIGS. 9A to 9C, in a state where the connector for electrical connection 1 is not fully connected to the inlet 4, an apical end of the release button 23 protrudes a little from the case 10.

In contrast, as shown in FIG. 9D, in a state where the connector for electrical connection 1 is fully connected to the inlet 4, the slide lever 52 moves backward, when viewed from the case 10, together with the link 14 and the locking lever 15, and accordingly a front end of the release lever 55 is fitted in a recess 521 of the slide lever 52. At this time, the release lever 55 rotates clockwise about the shaft 56, and accordingly the release button 23 is pushed up by a rear end of the release lever 55. As a result, a projection amount of the release button 23 is increased, compared with a case where the connector for electrical connection 1 is not fully connected to the inlet 4. Thereby, it is possible to inform a user about that the connector for electrical connection 1 is fully connected to the inlet 4.

With respect to this connector for electrical connection 1, while electric power is supplied to the contact 13, the solenoid device 24 prevents the release button 23 from being operated such that the connector for electrical connection 1 is not detached from the inlet 4. When electric charge to the electric motor vehicle 2 is completed, the pin 241 of the solenoid device 24 is retracted so as to allow the release button 23 to be operated.

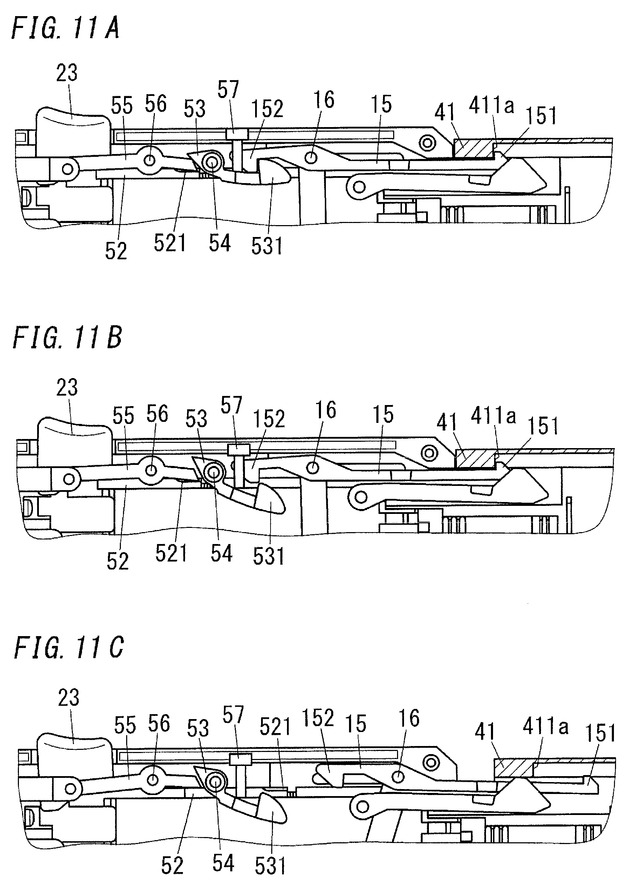

However, in a case where the pin 241 is kept moved forward due to failure of the solenoid device 24, for example, the release button 23 cannot be pushed down and therefore the connector for electrical connection 1 cannot be detached from the inlet 4. Thus, in the present embodiment, the pin 57 is provided so as to enable forcible detachment of the connector for electrical connection 1 from the inlet 4 even when the release button 23 cannot be pushed down due to failure of the solenoid device 24. Concrete explanations referring to FIGS. 11A to 11C are provided below.

FIG. 11A illustrates such a state that the release button 23 cannot be pushed down due to failure of the solenoid device 24. In this state, the hook part 152 of the locking lever 15 is caught by the hook part 531 of the release lever 53, and the hook part 151 of the locking lever 15 is caught by the stepped part 411a of the recess 411 of the inlet 4. Therefore, a user cannot pull out the connector for electrical connection 1.

In a state as shown in FIG. 11A, when the pin 57 is pushed into the case 10 with a dedicated special tool (not shown), the release lever 53 is pushed down by an end of the pin 57 and accordingly the release lever 53 rotates clockwise about the shaft 54 (see FIG. 11B). As a result, the hook part 531 of the release lever 53 is separated from the hook part 152 of the locking lever 15.

When the case 10 is pulled backward while the hook part 531 of the release lever 53 is separated from the hook part 152 of the locking lever 15, the connector for electrical connection 1 can be detached from the inlet 4 through an operation process as described above (see FIG. 11C). In the present embodiment, the solenoid device 24 constitutes a suppression part, and the pin 57 constitutes a forced release part.

In the present embodiment, the explanations are made to a case where an apparatus is the electric motor vehicle 2, as an example. However, the apparatus is not limited to the electric motor vehicle 2, but may be a fixed storage battery having an electric storage part. In the present embodiment, the explanations are made to a case where the electric power unit 3 is a DC/AC power converter, as an example. However, the electric power unit 3 is not limited to one as in the present embodiment, but may supply AC power to the electric motor vehicle 2. Note that, in this case, it is necessary to provide the electric motor vehicle 2 with a function to convert AC power to DC power.

In the present embodiment, the explanations are made to a case where the electric power unit 3 supplies electric power to the electric motor vehicle 2, as an example, but the connector for electrical connection 1 may be used for power supply from the electric motor vehicle 2 to the electric power unit 3 or for bidirectional power supply. In the present embodiment, the rotary handle 36 is used, but a slide handle may be used, as long as it is possible to open or close the contact part 38.

In the present embodiment, the groove 114 along which the third shaft 16 moves in the front and back direction serves as a guide. However, a guide is not limited to one as in the present embodiment, but may be a through hole penetrating through the main body 41, for example. In the present embodiment, a side surface of the contact pin 44 is in contact with an inner surface of the power feeding socket 43, but a contact pin of the inlet 4 may be formed at a bottom of the power feeding socket 43 so as to enable contact with the contact pin 44.

Further, the forced release part is not limited to the pin 57 of the present embodiment, but may have another structure, as long as it is possible to forcibly release a fixed state made by the locking lever 15.

The connector for electrical connection 1 of the present embodiment includes the contact 13 and the case 10, and is electrically connected to the inlet 4 by insertion of the contact 13 into the recess 411 formed in the inlet 4. The case 10 can move toward the inlet 4 with respect to the contact 13 while the contact 13 is being inserted to the predetermined position in the recess 411.

As with the connector for electrical connection 1 of the present embodiment, it is preferable to further include a stopper 27. In this case, when the contact 13 does not reach the predetermined position in the recess 411, the stopper 27 suppresses the contact 13 from moving toward the case 10. Further, when the contact 13 reaches the predetermined position in the recess 411, the stopper 27 cancels the suppression of movement of the contact 13 by coming into contact with the inlet 4.

As with the connector for electrical connection 1 of the present embodiment, it is preferable to further include the link 14 and the locking lever 15. In this case, the link 14 has a middle portion connected to the contact 13 via the first shaft 18 and one end attached to the case 10 via the second shaft 17, and is configured to rotate about the second shaft 17 with respect to the case 10. The locking lever 15 is configured to rotate between the fixing position where the case 10 is fixed to the inlet 4 and the release position where the case 10 is detached from the inlet 4. Further, the locking lever 15 is connected to the other end of the link 14 via the third shaft 16. The case 10 is provided with the groove 114 (guide) along which the third shaft 16 moves together with the movement of the contact 13.

As with the connector for electrical connection 1 of the present embodiment, it is preferable to further include the contact part 38, the handle 36, the rack 34 and the pinion 35. In this case, the contact part 38 is configured to open or close the power feeding path to the inlet 4. The handle 36 is configured to move between the first position where the contact part 38 is opened and the second position where the contact part 38 is closed. The rack 34 and the pinion 35 are configured to move the handle 36. The rack 34 is configured to move away from the inlet 4 by a force applied by the inlet 4 at a time of connection to the inlet 4. The pinion 35 meshing with the rack 34 is configured to move the handle 36 from the first position to the second position.

As with the connector for electrical connection 1 of the present embodiment, it is preferable to further include the contact part 38, the pinion 21 (handle), the rack 19 and the pinion 20. In this case, the contact part 38 is configured to open or close the power feeding path to the inlet 4. The pinion 21 is configured to move between the first position where the contact part 38 is opened and the second position where the contact part 38 is closed. The rack 19 and the pinion 20 are configured to move the pinion 21. The rack 19 is configured to move away from the contact 13 by a force applied by the contact 13 at a time of connection to the inlet 4. The pinion 20 meshing with the rack 19 is configured to move the pinion 21 from the first position to the second position.

As with the connector for electrical connection 1 of the present embodiment, it is preferable to further include the locking lever 15, the release button 23 (operation part), the release lever 53 (release part), the solenoid device 24 (suppression part) and the pin 57 (forced release part). In this case, the locking lever 15 is configured to rotate between the fixing position where the case 10 is fixed to the inlet 4 and the release position where the case 10 is detached from the inlet 4. The release button 23 is operated to release the fixed state made by the locking lever 15. The release lever 53 is configured to move in the direction of releasing the fixed state made by the locking lever 15 in accordance with operation for the release button 23. The solenoid device 24 suppresses operation for the release button 23 while electric power is supplied to the contact 13, and allows operation for the release button 23 when power supply to the contact 13 is stopped. The pin 57 is configured to move the release lever 53 in the direction of releasing the fixed state made by the locking lever 15 in a state where the solenoid device 24 suppresses operation for the release button 23.

As with the connector for electrical connection 1 of the present embodiment, it is preferable to electrically connect the apparatus (the electric motor vehicle 2) having the electric storage part (the storage battery 40) and the electric power unit 3 configured to control at least one of electric charging to the apparatus and electric discharging from the apparatus.

As with the connector for electrical connection 1 of the present embodiment, it is preferable that the apparatus be the electric motor vehicle 2.

## Claims

1. A connector for electrical connection, a contact of which is inserted into a recess formed in an inlet so as to be electrically connected to the inlet, the connector for electrical connection comprising:
the contact, and
a case movable toward the inlet with respect to the contact in a state where the contact is being inserted to a predetermined position in the recess.

2. The connector for electrical connection according to claim 1, further comprising a stopper configured to, when the contact does not reach the predetermined position, suppress the contact from moving toward the case, and to, when the contact reaches the predetermined position, cancel the suppression of movement of the contact by coming into contact with the inlet.

3. The connector for electrical connection according to claim 1 or 2, further comprising:
a link which has a middle portion connected to the contact via a first shaft and one end attached to the case via a second shaft, and is configured to rotate about the second shaft with respect to the case; and
a locking lever configured to rotate between a fixing position where the case is fixed to the inlet and a release position where the case is detached from the inlet,
the locking lever being connected to another end of the link via a third shaft, and
the case having a guide along which the third shaft moves together with movement of the contact.

4. The connector for electrical connection according to any one of claims 1 to 3, further comprising:
a contact part configured to open or close a power feeding path to the inlet;
a handle configured to move between a first position where the contact part is opened and a second position where the contact part is closed; and
a rack and a pinion configured to move the handle,
the rack being configured to move away from the inlet by a force applied by the inlet at a time of connection to the inlet, and
the pinion to mesh with the rack being configured to move the handle from the first position to the second position.

5. The connector for electrical connection according to any one of claims 1 to 3, further comprising:
a contact part configured to open or close a power feeding path to the inlet;
a handle configured to move between a first position where the contact part is opened and a second position where the contact part is closed; and
a rack and a pinion configured to move the handle,
the rack being configured to move away from the contact by a force applied by the contact at a time of connection to the inlet, and
the pinion to mesh with the rack being configured to move the handle from the first position to the second position.

6. The connector for electrical connection according to any one of claims 1 to 5, further comprising:
a locking lever configured to rotate between a fixing position where the case is fixed to the inlet and a release position where the case is detached from the inlet;
an operation part to be operated to release a fixed state made by the locking lever;
a release part configured to move in a direction of releasing the fixed state made by the locking lever in accordance with operation for the operation part;
a suppression part configured to suppress operation for the operation part in a state where electric power is supplied to the contact, and allow operation for the operation part when power supply to the contact is stopped; and
a forced release part configured to move the release part in the direction of releasing the fixed state made by the locking lever in a state where the suppression part suppresses operation for the operation part.

7. The connector for electrical connection according to any one of claims 1 to 6, the electrical connection connector being configured to electrically connect: an apparatus having an electric storage part; and an electric power unit configured to control at least one of electric charging to the apparatus and electric discharging from the apparatus.

8. The connector for electrical connection according to claim 7, wherein the apparatus is an electric motor vehicle.
